# FASCICULE DE BREVET EUROPEEN

(11) **EP 2 881 886 B1**
(45) Date de publication et mention de la délivrance du brevet: **18.09.2019**
(21) Numéro de dépôt: 14196309.0
(22) Date de dépôt: 04.12.2014
(51) Int. Cl.: G06F 21/60, G06F 21/62

(54) **PROCÉDÉ D'ÉTABLISSEMENT D'UNE RELATION DE CONFIANCE POUR LE PARTAGE DE RESSOURCES ENTRE DEUX LOCATAIRES DANS UN RÉSEAU EN NUAGE**
VERFAHREN ZUR HERSTELLUNG EINER VERTRAUENSBEZIEHUNG FÜR DAS TEILEN VON RESSOURCEN ZWEIER TEILNEHMER IN EINEM CLOUD-NETZWERK
METHOD FOR ESTABLISHING A RELATIONSHIP OF TRUST FOR RESOURCE SHARING BETWEEN TWO TENANTS IN A CLOUD NETWORK

(30) Priorité: 05.12.2013 FR 1362132
(43) Date de publication de la demande: 10.06.2015
(73) Titulaire: Orange, 75015 Paris (FR)
(72) Inventeur: He, Ruan, 92130 Issy les Moulineaux (FR); Qian, Xiangjun, Ruijin Jiangxi 342500 (CN)
(74) Mandataire: Delumeau, François Guy

(56) Documents cités:
- TANG BO ET AL: "A multi-tenant RBAC model for collaborative cloud services", 2013 ELEVENTH ANNUAL CONFERENCE ON PRIVACY, SECURITY AND TRUST, IEEE, 10 juillet 2013 (2013-07-10), pages 229-238, XP032480043, DOI: 10.1109/PST.2013.6596058 [extrait le 2013-09-11]

## Description

L'invention se rapporte au domaine général des télécommunications, et notamment aux systèmes informatiques dits « en nuage », connus également sous le nom de systèmes de « cloud computing ».

Elle concerne plus particulièrement l'accès par un utilisateur à des ressources informatiques mises à la disposition de cet utilisateur par un système de cloud computing.

Selon la définition donnée par le National Institute of Standards and Technology (NIST), l'informatique en nuage ou « cloud computing » est un modèle permettant à des utilisateurs d'accéder via un réseau, à la demande et en libre-service, à des ressources informatiques et réseaux comme un espace de stockage, de la puissance de calcul, des applications, des logiciels ou encore des services, qui sont virtualisées (i.e. rendues virtuelles) et mutualisées.

Autrement dit, les ressources informatiques et réseaux ne se trouvent plus sur un serveur local d'une entité ou sur un poste d'un utilisateur, mais sont, conformément au concept de cloud computing, dématérialisées dans un nuage composé de plusieurs serveurs distants interconnectés entre eux, et accessibles par les utilisateurs via une application réseau. Les utilisateurs peuvent ainsi accéder de manière évolutive à ces ressources, sans avoir à gérer l'infrastructure sous-jacente de gestion de ces ressources qui est souvent complexe.

Le concept de « cloud computing » est décrit plus en détails dans le document édité par l'ITU (International Telecommunication Union) intitulé « FG Cloud TR, version 1.0 - Part 1 : Introduction to the cloud ecosystem : définitions, taxonomies, use cases and high-level requirements », février 2012.

De façon connue, le « cloud computing » bénéficie de nombreux avantages :
- flexibilité et diversité des ressources qui sont mutualisées et quasiment illimitées,
- évolutivité possible des ressources, fournies à la demande,
- administration simple et automatisée des infrastructures informatiques et réseaux des entreprises, et réduction des coûts d'administration,
- etc.

Un enjeu majeur du concept de « cloud computing » est toutefois de garantir la protection et la sécurisation de l'accès aux ressources.

En effet, passer d'un environnement informatique traditionnel, sécurisé et fermé, à une infrastructure dans un nuage, ouverte et mutualisée, sur laquelle l'utilisateur ou l'entreprise n'a aucun contrôle, et qui est accessible via un réseau de télécommunications tel que le réseau public Internet, particulièrement vulnérable et sans cesse sujet aux attaques et aux piratages informatiques, n'est pas sans susciter quelques inquiétudes chez les potentiels utilisateurs en termes de sécurité.

Le contrôle d'accès apparait donc aujourd'hui pour l'ITU comme un moyen fondamental pour sécuriser l'accès à des systèmes informatiques en nuage.

De nombreux mécanismes existent dans l'état de la technique actuel pour contrôler (et sécuriser) l'accès à un système informatique (ou de façon équivalente, à un système d'information) d'entités ou d'organisations telles une entreprise.

Ces mécanismes se basent essentiellement sur deux éléments, à savoir :
- la définition d'une politique en matière de droits d'accès formulée selon une approche sujet-objet-action, i.e. tel sujet a la permission ou non de réaliser telle action sur tel objet, et
- la mise en oeuvre de cette politique sur réception d'une requête d'un utilisateur souhaitant accéder aux ressources offertes par le système informatique, via un contrôle des droits d'accès de l'utilisateur à ces ressources.

De tels mécanismes sont par exemple les modèles de contrôle d'accès RBAC (Role-Based Access Control) et OrBAC (Organization-Based Access Control), décrits respectivement dans les documents de R-S. Sandhu et al., « Role-Based Access Control Models », IEEE Computer 29(2), pages 38-47, 1996, et de A. Abou El Kalam et al., « Organization Based Access Control », 4th IEEE International Workshop on Policies for Distributed Systems and Networks, 2003.

Le modèle OrBAC s'appuie sur un concept d'organisation, et permet de modéliser une variété de politiques de sécurité définies pour et par cette organisation pour l'accès à ses ressources.

Ainsi, plus précisément, le modèle OrBAC introduit les notions de rôles, d'activités et de vues pour permettre de définir une politique de sécurité associée à une organisation, où :
- un rôle est un ensemble de sujets sur lequel les mêmes règles de sécurité sont appliquées ;
- une activité est un ensemble d'actions sur lequel les mêmes règles de sécurité sont appliquées ; et
- une vue est un ensemble d'objets sur lequel les mêmes règles de sécurité sont appliquées.

L'IETF (Internet Engineering Task Force) a défini une architecture de référence XACML (extensible Access Control Markup Language) qui peut être utilisée par le modèle de contrôle d'accès OrBAC, pour l'implémentation du contrôle d'accès dans les systèmes d'information. Cette architecture XACML se base en effet, de façon connue en soi, sur cinq types de blocs fonctionnels, à savoir :
- un bloc chargé d'appliquer une politique de contrôle d'accès, ou bloc PEP (Policy Enforcement Point) ;
- un bloc chargé de prendre une décision en matière d'accès, ou bloc PDP (Policy Decision Point) ;
- un répertoire contenant les politiques de contrôle d'accès (Policy Repository) ;
- un bloc chargé de la gestion des informations en relation avec les politiques d'accès, ou bloc PIP (Policy Information Point) ; et
- un bloc responsable de l'administration des politiques d'accès, ou bloc PAP (Policy Administration Point), qui spécifie et gère les politiques d'accès.

L'invention se situe plus particulièrement dans le contexte des systèmes en nuage à multiples locataires (en anglais « multi tenants ») dans lesquels une seule instance d'un système informatique en nuage est partagée par plusieurs organisations clientes (locataires ou en anglais « tenants »).

Un locataire peut ainsi être défini comme un contenant atomique auquel on attribue un ensemble d'utilisateurs et une partition virtuelle de ressources. Dans la pratique, un locataire peut permettre de modéliser une entreprise, un service d'une entreprise, ou un projet.

Actuellement, dans la plupart des systèmes en nuage à plusieurs locataires, les ressources de chacun des locataires sont cloisonnées dans des domaines indépendants et étanches, chaque locataire gérant indépendamment sa politique de contrôle d'accès.

Cette conception empêche malheureusement la coopération entre les différents locataires.

Pour remédier à ce problème, plusieurs modèles de collaboration des locataires ont été proposées.

En particulier, le document « Multi-Tenancy Authorization Models for Collaborative Cloud Services » de Bo Tang, Ravi Shandu, et Qi Li publié en mai 2013 dans la revue IEEE In Collaboration Technologies and Systems (CTS), pp132-138 n°978-1-4673-1/13 décrit un système dérivé du modèle RBAC pour établir une relation de confiance entre deux locataires dans un système en nuage.

D'une façon générale, une relation de confiance peut être définie comme un mécanisme de contrôle d'accès défini entre deux entités pour permettre à ces entités de partager des ressources de façon réglementée.

Une relation de confiance rompt ainsi l'isolement d'un locataire d'une manière contrôlée, les locataires restant en principe isolés les uns des autres, sauf lorsque les relations de confiance établies entre ces locataires leur permettent de partager certaines ressources, sous certaines conditions.

Les méthodes connues d'établissement de relations de confiance et de contrôle d'accès associées présentent un certain nombre de problèmes. En effet, ces méthodes :
- nécessitent de mettre en place, dans le système en nuage, un mécanisme de découverte de ressources permettant à chaque locataire d'avoir une vision globale du nuage lui permettant d'identifier un locataire avec lequel établir une relation de confiance ;
- ne permettent pas d'établir une relation de confiance entre deux locataires de façon automatique.

L'invention propose un mécanisme pour établir des relations de confiance entre des locataires dans un réseau en nuage qui ne présente pas ces inconvénients.

Le document intitulé « A multi-tenant RBAC model for collaborative cloud services » datant du 10 juillet 2013 (Tang Bo et al) concerne la partage de services dans un réseau en nuage et divulgue en particulier un système basé sur des rôles dans un environnement à locataires multiples dans lequel des permissions sont fournies en construisant des relations de confiances entre locataires.

### Objet et résumé de l'invention

L'invention est définie par les revendications indépendantes (revendications 1, 3, 6 et 7). Des modes de réalisation préférés sont définis par les revendications dépendantes.

### Brève description des dessins

D'autres caractéristiques et avantages de l'invention apparaîtront à la lumière de la description qui suit, faite en référence aux dessins annexés dans lesquels :
- la figure 1 représente un modèle de confiance conforme à un mode de réalisation de l'invention ;
- la figure 2 illustre un système de contrôle d'accès conforme à l'invention se système permettant d'implémenter le modèle de confiance de la figure 1 ;
- la figure 3 représente, sous forme d'organigramme, les principes étapes d'un procédé d'établissement d'une relation de confiance conforme à un mode particulier de réalisation de l'invention ; et
- la figure 4 représente, sous forme d'organigramme, les principes étapes d'un procédé de contrôle d'accès conforme à un mode particulier de réalisation de l'invention.

### Description détaillée d'un mode de réalisation

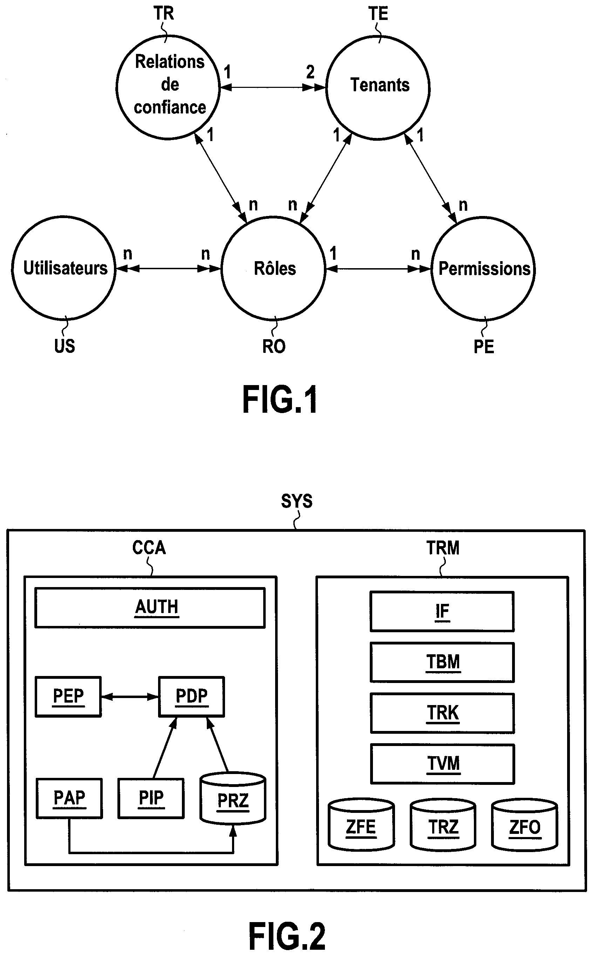

La figure 1 représente un modèle de confiance conforme à un mode de réalisation de l'invention.

Ce modèle de confiance s'appuie sur le modèle RBAC connu de l'homme du métier. Il comporte en particulier :
- Une entité RO « Rôles » décrivant des rôles au sens du modèle RBAC. On rappelle qu'un rôle représente un ensemble d'utilisateurs ayant droits d'accès communs et qu'un rôle offre une ou plusieurs permissions.
- Une entité PE « Permissions » décrivant des permissions, chaque permission étant associée à un ou plusieurs rôles ;
- Une entité US « Utilisateurs » décrivant des utilisateurs, chaque utilisateur ayant un ou plusieurs rôles, ceux-ci pouvant par exemple être définis en fonction d'un niveau de responsabilité ou de qualification ; cette association permettant de définir les droits d'accès dont bénéficie un utilisateur ;
- Une entité TE « Locataires » décrivant des locataires, chaque locataire étant associé à un ensemble de rôles et à un ensemble de permissions.

Le modèle de confiance selon l'invention comporte en outre une entité TR « Relations de Confiance » (en anglais « Trusted Relation »), une relation de confiance permettant à un locataire dit « bénéficiaire de confiance » (en anglais « Trustee ») de bénéficier d'un ou plusieurs rôles d'un locataire « donneur de confiance » (en anglais « Trustor »).

La figure 2 illustre un système SYS de contrôle d'accès conforme à l'invention, ce système permettant d'implémenter le modèle de confiance de la figure 1.

Ce système comprend principalement des composants de contrôle d'accès CCA conforme à l'architecture de référence XACML (conformément à l'invention, chaque locataire (ou « tenant ») utilise son propre composant de contrôle d'accès CCA) et un unique gestionnaire de relations de confiance TRM (en anglais « Trust Reference Monitor ») centralisé propre à l'invention.

Les composants de contrôle d'accès sont, dans cet exemple :
- Un module AUTH d'authentification ;
- Une zone PRZ de stockage de politiques (en anglais « Policy Repository ») dans laquelle sont mémorisées les politiques des différents locataires ;
- Un bloc PEP (en anglais « Policy Enforcement Point ») de contrôle d'accès, apte à envoyer, au bloc PDP défini ci-après, une demande de permission au format XACML, à recevoir une décision d'autorisation ou de refus, et à appliquer cette décision ;
- Un bloc PDP (en anglais « Policy Decision Point ») apte à déterminer, sur réception d'une demande XACML de permission émise par le bloc PEP, en fonction de la politique applicable, si la permission doit être autorisée ou refusée, et à délivrer en conséquence une décision d'autorisation ou de refus au bloc PEP. Lorsque des valeurs d'attributs nécessaires au bloc PDP pour prendre sa décision ne sont pas présentes dans la requête XACML, le bloc PDP peut interroger le bloc PIP défini ci-après en vue de les obtenir.
- Un bloc PIP (en anglais « Policy Information Point ») apte, sur requête du bloc PDP, à lui fournir des valeurs d'attributs lorsque celles-ci ne sont pas présentes dans la requête XACML envoyée au bloc PDP par le bloc PEP.
- Un bloc PAP (en anglais « Policy Administration Point ») dont la fonction principale est de créer et gérer les politiques des différents locataires.

Le gestionnaire de relations de confiance selon l'invention TRM comporte, dans cet exemple de réalisation :
- Une interface IF accessible par les administrateurs des différents locataires pour spécifier des « exigences » et des « opportunités » tels que définis ci-après ;
- Un module TBM d'établissement d'une relation de confiance (en anglais « Trust Builder ») apte à comparer ou rapprocher les différentes exigences et opportunités des différents locataires et en cas de compatibilité, à établir une relation de confiance entre un locataire donneur de confiance et un locataire bénéficiaire de confiance et à stoker cette relation de confiance dans une zone TRZ de stockage de relations de confiance (en anglais « Trust Repository »).
- Un module TRK de rupture de relation de confiance (en anglais « Trust Revocator ») apte à rompre une relation de confiance établie entre deux locataires lorsqu'une condition de rupture est vérifiée.
- Un module TVM vérificateur de relation de confiance (en anglais « Trust Verifier ») apte à déterminer si un premier locataire peut accéder aux ressources d'un deuxième locataire en fonction des relations de confiance établies entre ces deux locataires.
- La zone TRZ de stockage de relations de confiance précitée dans laquelle sont stockées les relations de confiance entre les différents locataires.

Conformément à l'invention, les exigences et opportunités sont formalisées dans des « fichiers d'exigence » (en anglais « requirement files ») et des « fichiers d'opportunités » (en anglais « opportunity files ») interprétables par un ordinateur.

Plus précisément, un fichier d'exigences est un fichier dans lequel l'administrateur d'un locataire spécifie les permissions nécessaires ou requises à un locataire pour rendre un service particulier. Ce fichier d'exigences représente la volonté de ce locataire d'accéder aux ressources d'un autre locataire.

Dans le mode de réalisation décrit ici, le fichier d'exigences d'un locataire peut également décrire des préconditions requises pour établir une relation de confiance avec un autre locataire. Ces préconditions peuvent être de toute nature, notamment de nature technique ou commerciale.

Dans le mode de réalisation décrit ici, le fichier d'exigences d'un locataire peut également décrire les conditions pour rompre une relation de confiance établie avec un autre locataire.

Un exemple de fichier d'exigence est donné à l'Annexe A. Dans cet exemple, ce fichier comporte :
- un ensemble de permissions requises, en l'espèce la permission d'accéder en lecture à un fichier example_file_1 et en écriture à un fichier example_file_2 ;
- un ensemble de conditions pour rompre une relation de confiance établie avec un autre locataire. Dans cet exemple, l'unique condition est la réception d'une notification émise par l'administrateur du locataire.

Dans l'exemple de l'Annexe A, il n'est pas spécifié de préconditions pour établir une relation de confiance avec un autre locataire.

De façon similaire, un fichier d'opportunités est un document interprétable par un ordinateur, dans lequel l'administrateur d'un locataire spécifie les rôles qu'il offre aux autres locataires, un rôle correspondant à un ensemble de permissions.

Dans le mode de réalisation décrit ici, un fichier d'opportunités peut aussi contenir les conditions de cette offre.

Un exemple de fichier d'opportunités est donné à l'Annexe B. Dans cet exemple, ce fichier comporte :
- un ensemble de permissions offertes, en l'occurrence la permission d'accéder en lecture à un fichier example_file_1 et en écriture à un fichier example_file_2 ;
- un ensemble de conditions pour rompre une relation de confiance établie entre ce locataire et un autre locataire. Dans cet exemple, l'unique condition est la réception d'une notification émise par l'administrateur du locataire.

Dans le mode de réalisation décrit ici, les fichiers d'exigences et les fichiers d'opportunités sont stockés respectivement dans une zone ZFE de stockage fichiers d'exigences et dans une zone ZFO de stockage de fichiers d'opportunités.

Dans le mode de réalisation décrit ici, les fichiers d'exigences et les fichiers d'opportunités sont au langage XML. En variante, on pourrait utiliser un langage ontologique, par exemple le langage OWL.

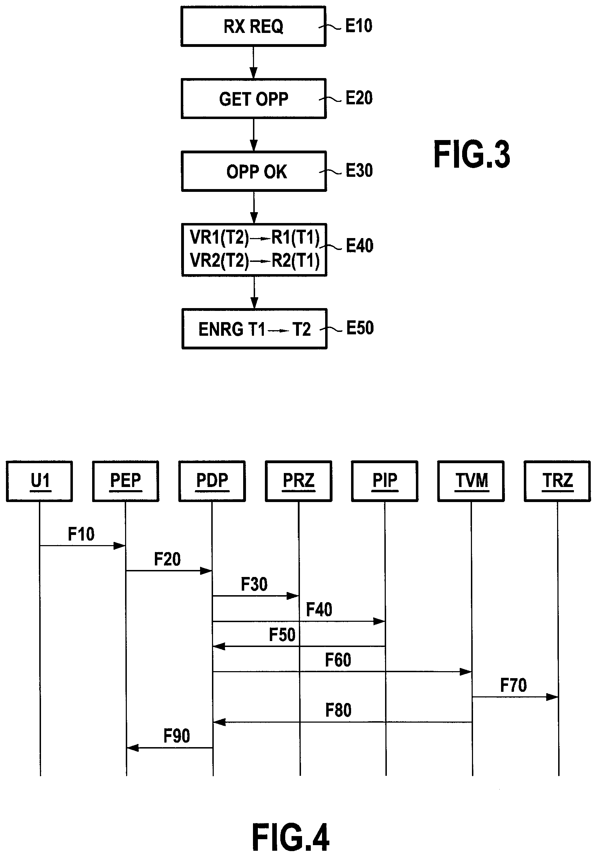

En référence à la figure 3, nous allons maintenant décrire un procédé pour établir une relation de confiance entre un locataire T1 donneur de confiance et un locataire T2 bénéficiaire de confiance.

Dans cet exemple, l'administrateur du donneur de confiance T1 fournit, via l'interface IF du gestionnaire de relations de confiance TRM un fichier d'opportunités OPP comportant un ensemble de rôles {r1, r2, r3} sans aucune condition. Dans cet exemple :
- le rôle r1 comporte deux permissions {p1, p2} ;
- le rôle r2 comporte deux permissions {p3, p4} ;
- le rôle r3 comporte deux permissions {p5, p6}.

Dans cet exemple, l'administrateur du bénéficiaire de confiance T2 fournit, via l'interface IF du gestionnaire de relations de confiance TRM un fichier d'exigences REQ demandant un ensemble de permissions {p1, p2, p3} sans aucune condition. Ce fichier comporte comme unique condition de rupture de relation de confiance, la réception d'un message de notification émis par le locataire T2.

Ce procédé est mis en oeuvre par le module TBM d'établissement de relation de confiance.

Il comporte une première étape E10 au cours de laquelle le module TBM d'établissement de relation de confiance reçoit le fichier d'exigences REQ du locataire T2.

Au cours d'une étape E20, le module TBM cherche, dans la zone ZFO de fichiers d'opportunités, un fichier d'opportunités OPP compatible avec le fichier d'exigences REQ, autrement dit comportant des opportunités correspondant aux exigences exprimées dans le fichier REQ.

Au cours d'une étape E30, le module TBM identifie que le fichier d'opportunités OPP du locataire T1 remplit ces conditions, les rôles r1, r2 comportant notamment les permissions p1, p2, p3 requises par le locataire T2.

Au cours d'une étape E40, le module TBM d'établissement de relation de confiance créé deux rôles virtuels vr1, vr2 dans l'espace de nommage (en anglais « namespace ») du locataire bénéficiaire de confiance T2, chacun de ces rôles virtuels vr1, vr2 pointant vers le rôle correspondant du locataire donneur de confiance r1, r2. On évite ainsi un conflit entre les espaces de nommage des deux locataires T1, T2.

Les rôles virtuels vr1, vr2 du bénéficiaire de confiance T2 sont ainsi visibles par les blocs PDP et PIP de T2 lorsque celui-ci consultent la politique du locataire T2 dans la zone PRZ de de stockage de politiques.

Le module TBM enregistre la relation de confiance établie entre T1 et T2 ainsi que les liens entre les rôles virtuels vr1, vr2 de T1 et les rôles r1, r2 de T2 dans la zone TRZ de stockage des relations de confiance au cours d'une étape E50.

En référence à la figure 4, nous allons maintenant décrire les principales étapes d'un procédé de contrôle d'accès conforme à l'invention.

On suppose qu'une relation de confiance a été établie entre le locataire T1 donneur de confiance et le locataire T2 bénéficiaire de confiance et qu'un rôle virtuel vr1 du locataire T2 pointe sur un rôle r1 du locataire T1.

Au cours d'une étape F10, l'utilisateur U1 du locataire T2 envoie une requête au bloc de contrôle d'accès PEP (Policy Enforcement Point) de T2 pour bénéficier de la permission p1.

Au cours d'une étape F20, le bloc PEP envoie une requête XACML au module PDP (« Policy Decision Point ») de T2 pour que celui-ci lui indique si le locataire T2 peut bénéficier ou non de cette permission p1.

Au cours d'une étape F30, le bloc PDP de T2 consulte la zone PRZ de de stockage de politiques de T2 et identifie le rôle virtuel vr1 de l'utilisateur U1.

Le bloc PDP de T2 consulte le module PIP de T2 pour obtenir des informations complémentaires (étapes F40 et F50). Il apprend ainsi que le rôle vr1 est un rôle virtuel.

Au cours d'une étape F60, le bloc PDP de T2 interroge le module TVM du gestionnaire de relations de confiance TRM unique et centralisé pour que celui-ci vérifie les relations de confiance dont bénéficie le locataire T2.

Au cours d'une étape F70, le module TVM consulte la zone TRZ de stockage de relations de confiance et détermine que le rôle virtuel vr1 du locataire T2 pointe sur le rôle r1 du locataire T1, et que ce rôle r1 offre la permission p1.

Au cours d'une étape F80, le module TVM indique au bloc PDP de T2 que le locataire T2 peut utiliser la permission P1.

Au cours d'une étape F90, le bloc PDP de T2 envoie une réponse positive au bloc PEP de T2 pour lui indiquer que le locataire T2 peut utiliser la permission p1.

Dans l'exemple de réalisation décrit ici, la relation de confiance entre les locataires T1 et T2 autorisant le locataire T2 à utiliser la ressource p1 perdure tant que l'administrateur de T2 n'envoie pas au module TRK de rupture de confiance une requête de révocation à cet effet.

Dans le mode de réalisation décrit ici, lorsque le module TRK de rupture de confiance reçoit une telle requête, il détruit les rôles virtuels vr1, vr2 de T2 et la relation de confiance entre les locataires T1 et T2 dans la zone TRZ.

L'étendue de la protection est définie par les revendications.

### ANNEXE A

<id>requirement-doc-1</id>
<tenant>example_tenant</tenant>
<Required PermissionList>
<RequiredPermission>(read, example file_1)</RequiredPermission>
<RequiredPermission>(write, example_file_2)</RequiredPermission>
</Required PermissionList>
<ConditionList>
<Condition>No_Condition</Condition>
</ConditionList>
< Revocation>Notified_by_Tenant</Revocation>

### ANNEXE B

<id>opportunity_doc_1</id>
<tenant>example_tenant</tenant>
<OfferedRoleList>
<OfferedRole>
<RoleID>Data_Analyzer</RoleID>
<Permission>(read, example_file_1)</Permission>
<Permission>(write,example_file_2)</Permission>
<OfferedRole>
</OfferedRoleList>
<ConditionList>
<Condition>No_Condition</Condition>
</ConditionList>

## Revendications

1. Procédé de partage de ressources entre un locataire (T2) bénéficiaire de confiance et un locataire (T1) donneur de confiance dans un réseau en nuage, ce procédé comportant :
- une étape (E10) de réception, par un module (TBM) d'établissement d'une relation de confiance, d'un fichier (REQ) d'exigences en provenance du locataire (T2) bénéficiaire de confiance, ledit fichier comportant au moins une permission (p1) souhaitée par ledit locataire ;
- une étape (E20, E30) de recherche, par un module (TBM) d'établissement d'une relation de confiance, d'au moins un fichier (OPP) d'opportunités émis par un locataire (T1) donneur de confiance, ce fichier comportant au moins lesdites permissions (p1) ;
- une étape (E50) d'enregistrement, par un module (TBM) d'établissement d'une relation de confiance, d'une information représentative d'une relation de confiance pour le partage de ressources entre lesdits locataires (T1, T2),
le procédé comprenant en outre :
- une étape (F10) de réception, par un module (PEP) de réception, en provenance du locataire bénéficiaire de confiance (T2), d'une requête pour bénéficier d'une permission (p1) d'accès à ladite ressource ;
- une étape (F30) d'identification, par un module (PDP, PIP) d'identification, d'un rôle virtuel (vr1) dans l'espace de nommage du locataire bénéficiaire de confiance (T2) ;
- une étape (F70) de vérification, par un module (TVM) de vérification, au cours de laquelle on vérifie que l'espace de nommage du locataire donneur de confiance (T1) comporte un rôle (r1) offrant ladite permission (p1) et qu'une relation de confiance pour le partage de ressources a été établie entre le locataire donneur de confiance (T1) et le locataire bénéficiaire de confiance (T2) ladite étape (F70) de vérification consistant à déterminer que ledit rôle virtuel (vr1) dans l'espace de nommage du locataire bénéficiaire de confiance (T2) pointe sur ledit rôle (r1) dans l'espace de nommage du locataire donneur de confiance (T1) ;
- une étape (F90) d'autorisation ou d'interdiction, par un module (PDP) de contrôle d'accès, dudit accès en fonction du résultat de ladite étape (E70) de vérification.

2. Procédé selon la revendication 1 comportant :
- une étape (E40) de création d'au moins un rôle virtuel (vrl) dans l'espace de nommage du locataire bénéficiaire de confiance (T2), ledit rôle virtuel (vrl) pointant vers un rôle (r1) de l'espace de nommage du locataire donneur de confiance (T1) comportant ladite permission (p1).

3. Système de contrôle d'accès pour le partage de ressources entre un locataire (T2) bénéficiaire de confiance et un locataire (T1) donneur de confiance dans un réseau en nuage, comportant un module (TBM) d'établissement d'une relation de confiance comprenant :
- un module de réception d'un fichier (REQ) d'exigences en provenance du locataire (T2) bénéficiaire de confiance, ledit fichier comportant au moins une permission (p1) souhaitée par ledit locataire ;
- un module de recherche d'au moins un fichier (OPP) d'opportunités émis par un locataire (T1) donneur de confiance, ce fichier comportant au moins lesdites permissions (p1) ; et
- un module (E50) d'enregistrement d'une information représentative d'une relation de confiance pour le partage de ressources entre lesdits locataires (T1, T2) ;
ledit système de contrôle d'accès comprenant en outre :
- un module (PEP) de réception, en provenance du locataire bénéficiaire de confiance (T2), d'une requête pour bénéficier d'une permission (p1) d'accès à ladite ressource ;
- un module (PDP, PIP) d'identification d'un rôle virtuel (vr1) dans l'espace de nommage du locataire bénéficiaire de confiance (T2) ;
- un module (TVM) pour vérifier que l'espace de nommage du locataire donneur de confiance (T1) comporte un rôle (r1) offrant ladite permission (p1) et qu'une relation de confiance pour le partage de ressources a été établie entre le locataire donneur de confiance (T1) et le locataire bénéficiaire de confiance (T2), ledit module (TVM) de vérification étant apte à déterminer que ledit rôle virtuel (vr1) dans l'espace de nommage du locataire bénéficiaire de confiance (T2) pointe sur ledit rôle (r1) dans l'espace de nommage du locataire donneur de confiance (T1); et
- un module (PDP) d'autorisation ou d'interdiction dudit accès en fonction du résultat de ladite vérification.

4. Système selon la revendication 3 **caractérisé en ce que** :
- ledit module de réception (PEP) comporte un bloc PEP apte à appliquer une politique de contrôle d'accès ;
- ledit module (PDP) d'autorisation ou d'interdiction comporte un bloc PDP apte à prendre une décision en matière de contrôle d'accès,
lesdits blocs PEP, PDP étant conformes à l'architecture de référence XACML, eXtensible Access Control Markup Language, utilisée par le modèle de contrôle d'accès OrBAC.

5. Système selon les revendications 3 ou 4 **caractérisé en ce que** :
- ledit module (PDP, PIP) d'identification d'un rôle virtuel du locataire bénéficiaire de confiance (T2) comporte un bloc PDP et un bloc PIP, lesdits blocs PDP, PIP étant conformes à l'architecture de référence XACML, eXtensible Access Control Markup Language, utilisée par le modèle de contrôle d'accès OrBAC.

6. Programme d'ordinateur (PG) comportant des instructions pour l'exécution des étapes du procédé selon l'une quelconque des revendications 1 à 2, lorsque ledit programme est exécuté par un ordinateur.

7. Support d'enregistrement (13) lisible par un ordinateur sur lequel est enregistré un programme d'ordinateur (PG) comprenant des instructions pour l'exécution des étapes du procédé selon l'une quelconque des revendications 1 à 2.

## Patentansprüche

1. Verfahren zum Teilen von Ressourcen zwischen einem vertrauensempfangenden Teilnehmer (T2) und einem vertrauensgebenden Teilnehmer (T1) in einem Cloud-Netzwerk, wobei dieses Verfahren aufweist:
- einen Schritt (E10) des Empfangens durch ein Modul (TBM) zum Einrichten einer Vertrauensbeziehung von einer Anforderungsdatei (REQ) von dem vertrauensempfangenden Teilnehmer (T2), wobei die Datei mindestens eine Erlaubnis (p1) aufweist, die von dem Teilnehmer gewünscht wird,
- einen Schritt (E20, E30) des Suchens durch ein Modul (TBM) zum Einrichten einer Vertrauensbeziehung von mindestens einer Datei (OPP) von Möglichkeiten, die von einem vertrauensgebenden Teilnehmer (T1) ausgegeben wird, wobei diese Datei mindestens die Erlaubnisse (p1) aufweist,
- einen Schritt (E50) des Speicherns durch ein Modul (TBM) zum Einrichten einer Vertrauensbeziehung einer Information, die für eine Vertrauensbeziehung für das Teilen von Ressourcen zwischen den Teilnehmern (T1, T2) repräsentativ ist,
wobei das Verfahren ferner aufweist:
- einen Schritt (F10) des Empfangens durch ein Modul (PEP) zum Empfangen von dem vertrauensempfangenden Teilnehmer (T2) einer Anfrage, um eine Zugriffserlaubnis (p1) auf die Ressource zu erhalten,
- einen Schritt (F30) des Identifizierens durch ein Identifizierungsmodul (PDP, PIP) einer virtuellen Rolle (vr1) in dem Namensraum des vertrauenempfangenden Teilnehmers (T2),
- einen Schritt (F70) des Überprüfens durch ein Überprüfungsmodul (TVM), bei dem überprüft wird, dass der Namensraum des vertrauensgebenden Teilnehmers (T1) eine Rolle (r1) aufweist, die die Erlaubnis (p1) erteilt, und dass eine Vertrauensbeziehung zum Teilen von Ressourcen zwischen dem vertrauensgebenden Teilnehmer (T1) und dem vertrauensempfangenden Teilnehmer (T2) eingerichtet worden ist,
wobei der Schritt (F70) des Überprüfens darin besteht, zu bestimmen, dass sich die virtuelle Rolle (vr1) in dem Namensraum des vertrauensempfangenden Teilnehmers (T2) auf die Rolle (r1) in dem Namensraum des vertrauensgebenden Teilnehmers (T1) richtet,
- einen Schritt (F90) des Genehmigens oder des Verbietens des Zugriffs durch ein Modul (PDP) zur Kontrolle des Zugriffs in Abhängigkeit von dem Ergebnis des Schrittes (E70) des Überprüfens.

2. Verfahren nach Anspruch 1, umfassend:
- einen Schritt (E40) des Erstellens von mindestens einer virtuellen Rolle (vr1) in dem Namensraum des vertrauensempfangenden Teilnehmers (T2), wobei sich die virtuelle Rolle (vr1) auf eine Rolle (r1) des Namensraums des vertrauensgebenden Teilnehmers (T1) richtet, der die Erlaubnis (p1) aufweist.

3. System zur Kontrolle des Zugriffs zum Teilen von Ressourcen zwischen einem vertrauensempfangenden Teilnehmer (T2) und einem vertrauensgebenden Teilnehmer (T1) in einem Cloud-Netzwerk, umfassend ein Modul (TBM) zum Einrichten einer Vertrauensbeziehung, umfassend:
- ein Modul zum Empfangen einer Anforderungsdatei (REQ) von dem vertrauensempfangenden Teilnehmer (T2), wobei die Datei mindestens eine Erlaubnis (p1) aufweist, die von dem Teilnehmer gewünscht wird,
- ein Modul zum Suchen von mindestens einer Datei (OPP) von Möglichkeiten, die von einem vertrauensgebenden Teilnehmer (T1) ausgegeben wird, wobei diese Datei mindestens die Erlaubnisse (p1) aufweist, und
- ein Modul (E50) zum Speichern einer Information, die für eine Vertrauensbeziehung für das Teilen von Ressourcen zwischen den Teilnehmern (T1, T2) repräsentativ ist,
wobei das System zur Kontrolle des Zugriffs ferner aufweist:
- ein Modul (PEP) zum Empfangen von dem vertrauensempfangenden Teilnehmer (T2) einer Anfrage, um eine Zugriffserlaubnis (p1) auf die Ressource zu erhalten,
- ein Identifizierungsmodul (PDP, PIP) einer virtuellen Rolle (vr1) in dem Namensraum des vertrauensempfangenden Teilnehmers (T2),
- ein Überprüfungsmodul (TVM), um zu überprüfen, dass der Namensraum des vertrauensgebenden Teilnehmers (T1) eine Rolle (r1) aufweist, die die Erlaubnis (p1) erteilt, und dass eine Vertrauensbeziehung zum Teilen von Ressourcen zwischen dem vertrauensgebenden Teilnehmer (T1) und dem vertrauensempfangenden Teilnehmer (T2) eingerichtet worden ist, wobei das Überprüfungsmodul (TVM) geeignet ist, zu bestimmen, dass sich die virtuelle Rolle (vr1) in dem Namensraum des vertrauensempfangenden Teilnehmers (T2) auf die Rolle (r1) in dem Namensraum des vertrauensgebenden Teilnehmers (T1) richtet, und
- ein Modul (PDP) des Genehmigens oder des Verbietens des Zugriffs in Abhängigkeit von dem Ergebnis des Überprüfens.

4. System nach Anspruch 3, **dadurch gekennzeichnet, dass**:
- das Modul zum Empfangen (PEP) einen Block PEP aufweist, der geeignet ist, eine Politik der Zugriffskontrolle anzuwenden,
- das Modul (PDP) des Genehmigens oder des Verbietens einen Block PDP aufweist, der geeignet ist, eine Entscheidung hinsichtlich einer Zugriffskontrolle zu treffen,
wobei die Blöcke PEP, PDP mit der XACML-Referenzarchitektur (eXtensible Access Control Markup Language) konform sind, die von dem OrBAC-Zugriffskontrollmodell verwendet wird.

5. System nach den Ansprüchen 3 oder 4, **dadurch gekennzeichnet, dass**:
- das Identifizierungsmodul (PDP, PIP) einer virtuellen Rolle des vertrauensempfangenden Teilnehmers (T2) einen Block PDP und einen Block PIP aufweist, wobei die Blöcke PDP, PIP mit der XACML-Referenzarchitektur (eXtensible Access Control Markup Language) konform sind, die von dem OrBAC-Zugriffskontrollmodell verwendet wird.

6. Computerprogramm (PG), umfassend Anleitungen zum Ausführen der Schritte des Verfahrens nach einem der Ansprüche 1 bis 2, wenn das Programm von einem Computer ausgeführt wird.

7. Computerlesbares Aufzeichnungsmedium (13), auf dem ein Computerprogramm (PG) aufgezeichnet ist, umfassend Anleitungen zum Ausführen der Schritte des Verfahrens nach einem der Ansprüche 1 bis 2.

## Claims

1. Method for sharing resources between a trustee tenant (T2) and a trustor tenant (T1) in a cloud network, this method including:
- a step (E10) of reception, by a module (TBM) for establishing a trust relationship, of a requirements file (REQ) from the trustee tenant (T2), said file containing at least one permission (p1) desired by said tenant,
- a step (E20, E30) of searching, by a module (TBM) for establishing a trust relationship, for at least one opportunities file (OPP) transmitted by a trustor tenant (T1), this file containing at least said permissions (p1);
- a step (E50) of recording, by a module (TBM) for establishing a trust relationship, an item of information representative of a trust relationship for the sharing of resources between said tenants (T1, T2), the method furthermore comprising:
- a step (F10) of reception, by a reception module (PEP), from the trustee tenant (T2), of a request to benefit from permission (p1) to access said resource;
- a step (F30) of identification, by an identification module (PDP, PIP), of a virtual role (vrl) in the namespace of the trustee tenant (T2);
- a step (F70) of verification, by a verification module (TVM), during which it is verified that the namespace of the trustor tenant (T1) contains a role (r1) offering said permission (p1) and that a trust relationship for the sharing of resources has been established between the trustor tenant (T1) and the trustee tenant (T2), said verification step (F70) consisting in determining that said virtual role (vrl) in the namespace of the trustee tenant (T2) points to said role (r1) in the namespace of the trustor tenant (T1) ;
- a step (F90) of authorization or prevention, by an access control module (PDP), of said access on the basis of the result of said verification step (E70).

2. Method according to Claim 1, including:
- a step (E40) of creating at least one virtual role (vrl) in the namespace of the trustee tenant (T2), said virtual role (vrl) pointing to a role (r1) of the namespace of the trustor tenant (T1) containing said permission (p1).

3. Access control system for sharing resources between a trustee tenant (T2) and a trustor tenant (T1) in a cloud network, including a module (TBM) for establishing a trust relationship, comprising:
- a module for receiving a requirements file (REQ) from the trustee tenant (T2), said file containing at least one permission (p1) desired by said tenant;
- a module for searching for at least one opportunities file (OPP) transmitted by a trustor tenant (T1), this file containing at least said permissions (p1); and
- a module (E50) for recording an item of information representative of a trust relationship for the sharing of resources between said tenants (T1, T2);
said access control system furthermore comprising:
- a module (PEP) for receiving, from the trustee tenant (T2), a request to benefit from permission (p1) to access said resource;
- a module (PDP, PIP) for identifying a virtual role (vrl) in the namespace of the trustee tenant (T2);
- a module (TVM) for verifying that the namespace of the trustor tenant (T1) contains a role (r1) offering said permission (p1) and that a trust relationship for the sharing of resources has been established between the trustor tenant (T1) and the trustee tenant (T2), said verification module (TVM) being able to determine that said virtual role (vrl) in the namespace of the trustee tenant (T2) points to said role (r1) in the namespace of the trustor tenant (T1); and
- a module (PDP) for authorizing or preventing said access on the basis of the result of said verification.

4. System according to Claim 3, **characterized in that**:
- said reception module (PEP) includes a PEP block able to apply an access control policy;
said authorization or prevention module (PDP) includes a PDP block able to make a decision in terms of access control,
said PEP and PDP blocks being in accordance with the XACML, eXtensible Access Control Markup Language, reference architecture used by the OrBAC access control model.

5. System according to Claims 3 or 4, **characterized in that**:
- said module (PDP, PIP) for identifying a virtual role of the trustee tenant (T2) includes a PDP block and a PIP block, said PDP and PIP blocks being in accordance with the XACML, eXtensible Access Control Markup Language, reference architecture used by the OrBAC access control model.

6. Computer program (PG) including instructions for executing the steps of the method according to either one of Claims 1 and 2 when said program is executed by a computer.

7. Computer-readable recording medium (13) on which there is recorded a computer program (PG) comprising instructions for executing the steps of the method according to either one of Claims 1 and 2.
